## Europäisches Patentamt

## European Patent Office

## Office européen des brevets

(11) Publication number: **0 139 312 B1**

(12) **EUROPEAN PATENT SPECIFICATION**

(45) Date of publication of patent specification: **08.11.89**

(51) Int. Cl.⁴: **G 01 N 27/00**

(21) Application number: **84201154.6**

(22) Date of filing: **23.08.84**

(60) Divisional application 88200725 filed on 14.04.88.

(54) Apparatus for selectively measuring ions in a liquid.

(30) Priority: **24.08.83 NL 8302963**
**16.08.84 US 641911**

(43) Date of publication of application:
**02.05.85 Bulletin 85/18**

(45) Publication of the grant of the patent:
**08.11.89 Bulletin 89/45**

(84) Designated Contracting States:
**DE FR GB IT NL**

(56) References cited:
**GB-A-2 060 255**
**US-A-4 020 830**
**US-A-4 086 642**

(73) Proprietor: **CORDIS EUROPA N.V.**
**Oosteinde 8**
**NL-9301 LJ Roden (NL)**

(72) Inventor: **Ligtenberg, Hendrikus C. G.**
**Johannes Vermeerstraat 15**
**NL-9312 PZ Nietap (NL)**
Inventor: **Veld, Albertus**
**Nijenrode 39**
**NL-9301 XS Roden (NL)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

The present invention relates to an apparatus for selectively measuring ions in a liquid comprising a measuring circuit including a chemically sensitive ion sensor in the form of an ion-sensitive field effect transistor (ISFET), a reference electrode, and an amplifier.

Such an apparatus for measuring ions in a liquid using an ISFET are known from, for example US—A—4,020,830. Said prior apparatus includes a measuring circuit and an ISFET immersed in a liquid for selectively measuring the ion activity in the liquid. Different ISFETS may be used for measuring different ion activities, such as for example pH, pK, pNa.

Although the use of an ISFET in such a measuring apparatus has been found to be very useful for measuring ions, especially in the medical and biomedical field, such usefulness has some limitations in actual practice. In this respect, voltages that develop between the surface of the gate insulator of the ISFET and the underlying bulk material of the ISFET establish an electrical field in the gate insulator which may adversely affect the operation of the ISFET.

If this electrical field which may be caused by external influences exceeds a maximum value, dielectrical breakdown may occur in the gate insulator region and the ISFET may be damaged. When the gate insulator consists of a multi-layer system (for example of combinations of $SiO_2$—$Si_3N_4$ or $SiO_2$—$Al_2O_3$), an unduly strong electrical field may produce still another effect, namely a shift in the threshold voltage of the ISFET, which may be permanent or which is only corrected after a long period of time. This results in the apparatus being permanently or temporarily out of order since the calibration of the apparatus is now incorrect.

The said electrical field may be created by external influences or effects such as, for example, from electrosurgical apparatus, heart defibrillation apparatus, electromagnetic influences resulting from switching inductive elements on or off, and also from electrostatic voltages generated during the manufacture of the ISFET sensor or during use of the apparatus in practice.

From US—A—4,086,642 it is known to protect an insulator for a gate of metal-oxide-semiconductor (MOSFET) from high voltages to be applied to the metal gate. Hereto a protecting circuit is applied through which an element with a high impedance to low voltages and a low impedance to high voltages in parallel with the measuring circuit. It is to be emphasized that the said field effect transistor to be protected with a protection circuit is a MOSFET.

Steps to protect an ISFET sensor from damage due to the presence of high voltages are described in the Thesis of Rosemary Smith entitled "Ion Sensitive F.E.T. with Polysilicon Gates" at the University of Utah, June 1982. These high voltages referred to are due to electrostatic changes of the insulator gate material. It is proposed to apply to the gate insulator of a conductive polysilicon layer which, via a Zener diode or a MOSFET switch is connected to the source electrode of the ISFET. The polysilicon layer should in turn be provided with an ion sensitive layer of material to be contacted with the liquid to be investigated. It has been found, however, that the proposed protection system limits the application of the sensor to situations where only fast changes in ion activity are to be monitored.

In accordance with the above it is an object of the invention to prevent the establishment of such an electrical field causing dilelectrical breakdown of the gate insulator of an ISFET or to prevent the calibrations of the apparatus being disturbed or upset.

According to the invention there is provided an apparatus of the type mentioned in the opening paragraph, the protection system of which comprises at least an electrode 42, 46 to be exposed to the liquid 30 to be investigated and connectable to the liquid via a low-impedance contact and a protection circuit 44, 48 coupled to the electrode 42, 46 which protection circuit is connected via a low-impedance contact to the ISFET 16 said protection circuit 44, 48 comprising one or more protective elements having a low impedance for high voltages and a high resistance to low voltages and adapted to become operative outside the operative range of said ISFET 16.

According to a further elaboration of the invention the protection system 12 comprises a first electrode 42 and a second electrode 46, which second electrode 46 is closely adjacent to the gate region 34 of said ISFET 16, said two electrodes 42, 46 being each coupled via a corresponding protective element 50, 51, 52, 54, 56, 58, 64, 65, 66, 68 to the low-impedance contact for said ISFET, while the first electrode may be coupled to said measuring circuit 10 by connecting a diode 50 and/or a MOSFET 54 which become conductive outside the operative range of the ISFET 16, a capacitor 56 and/or a mechanical switch 58 to the contact that is in low-impedance connection with the bulk of the ISFET 16.

The second electrode preferably takes the form of a metallic ring 62 applied around the gate region 34 of the ISFET and is coupled to said measuring circuit 10 by a diode 54 and/or a MOSFET 68 which become conductive outside the operative range of the ISFET. The second electrode may also be coupled to said measuring circuit 10 by two diodes 65, 66 series-connected in reverse polarity to each other.

The protective system according to the invention offers adequate protection from external effects resulting from electromagnetic sources of interference which may be encountered in the biomedical and industrial fields, for example, in cases in which the ISFET sensor comprising apparatus is used in co-operation with electrosurgical apparatus or heart defibrillation apparatus. The protection further extends to the danger of the occurrence of electrostatic voltages as may occur during the manufacture of the ISFET sensor or also during use of the apparatus in practice. Moreover, the protection offered by the protection circuit according to the invention is effective in combination with all types of housings of the ISFET sensor, for example, in the case of catheter tip sensors, current cells, and other types of housing. Moreover it is established that through the protective element according the invention obeying the conditions of having a low impedance for high voltages and a high resistance to low voltages inaccuracies of the measuring system due to leakage currents within the measuring apparatus are deleted as well.

The invention will be described in more detail with reference to the drawings. In said drawings,

Fig. 1 is a schematic circuit diagram of circuitry for a measuring apparatus including a protection system constructed according to the teachings of the present invention for measuring ions in a liquid.

Fig. 2 is a perspective view of one embodiment of the measuring apparatus shown schematically in Fig. 1 including a catheter mounting an ISFET sensor.

Fig. 3 is a plan view of an ISFET chip including a protection electrode particularly adapted for use in the measuring apparatus of the present invention.

Fig. 4 is a graph of current versus voltage that shows the current to an ISFET and a protection diode when a diode is used in the protection system of the present invention.

Figs. 5a and 5b are schematic circuit diagrams of the series connections of two diodes having reverse polarity to each other, which can be referred to as anti-series diodes and which can form part of the protection system of the present invention.

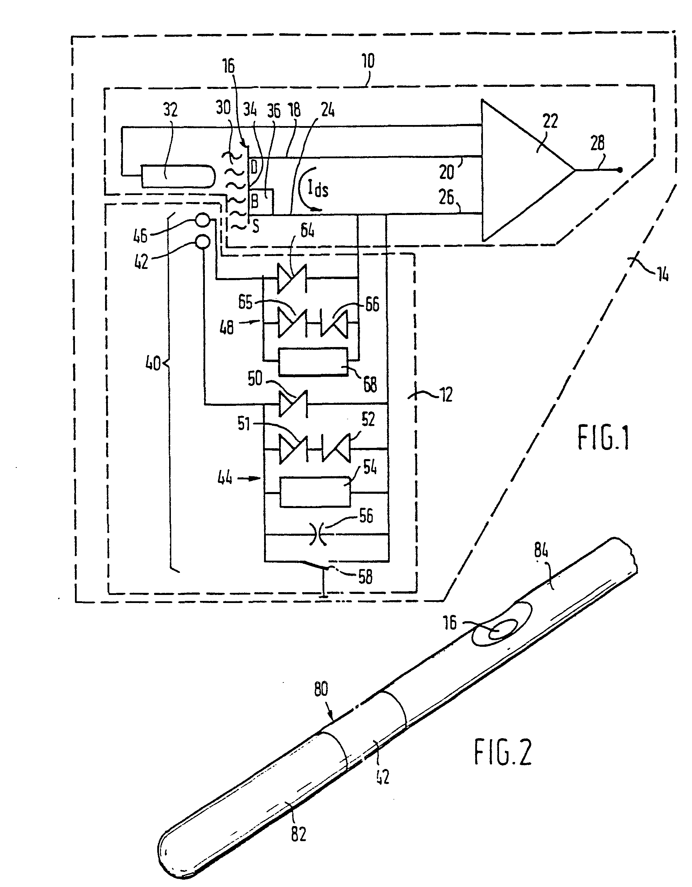

Referring now to the drawings in greater detail, there is illustrated schematically in Fig. 1 a measuring circuit 10 including a protection system 12 for a measuring apparatus 14 (Figs. 1, 2 and 3) constructed according to the teachings of the present invention.

The circuit 10 includes an ion-sensitive field effect transistor (ISFET or ISFET sensor) 16 having a drain 18 coupled to one input 20 of an amplifier 22 and a source 24 coupled to another input 26 of the amplifier 22 which has an output 28 that has an output signal indicative of the concentration of ions in a liquid (such as blood) 30.

Further, the circuit 10 includes a reference electrode 32 which applies a reference voltage to liquid 30 so that the gate region 34 is electrically connected to the amplifier 22, thus enabling control of the drain-source current $I_{DS}$ of the ISFET 16 in a manner similar to that used with MOSFET's. The voltage that is experienced by the ISFET, consists of a portion that is dependent on the ion activity in the liquid to which the ISFET is specifically sensitive, and of the externally applied voltage $V_{RB}$. A change in ion concentration gives rise to a change in drain-source current. This change in drain-source current can be compensated for by adjusting the externally applied voltage $V_{RB}$. The relationship between ion activity and the developed voltage is known. Therefore it follows that from the correction of $V_{RB}$ the change in ion concentration can be calculated. The amplifier measures the drain-source current constantly and corrects $V_{RB}$ for changes in that current in order to keep it constant. The output voltage of the amplifier is proportional to the changes in $V_{RB}$.

In accordance with the teachings of the present invention, a protection system or guard circuit 40 is coupled between the source 24 and the liquid 30 and includes a first electrode 42 coupled to the source 24 through a first protection circuit 44 and a second electrode 46 coupled to the source 24 through a second protection circuit 48 both having a high resistance to low voltages and a low impedance to high voltages.

According to the teachings of the present invention, the first electrode 42 is preferably made of metal, for example, of stainless steel having good blood compatibility, or of titanium. In other words, the first electrode 42 should be made of a conductive material having good blood compatibility and having a surface area sufficiently large to provide a low-impedance contact with the liquid 30 when the ISFET 16 and reference electrode 32 are immersed into the liquid 30 being investigated.

The first electrode 42 serves to protect the ISFET 16 from high A.C. voltages which occur, for example, with the use of an electrosurgical apparatus. For this purpose, the first electrode 42 is coupled to the source 24 by one or more protective elements in the protection circuit 44, such as by a diode 50, two bucking or reverse polarity series connected diodes 51, 52 and/or MOSFET 54, which become conductive outside the operative range of the ISFET 16, for example, a Zener diode or an avalanche diode or a MOSFET having a high threshold voltage to the measuring circuit, and/or a capacitor 56. Also, the first electrode 42 can be coupled to the source 24 by a mechanical switch 58 serving as a protective element. The protective elements 50—58 can, of course, be coupled to any contact which is in a low-impedance connection with the source 24 of the ISFET 16, for example, the drain 18 or bulk contact 36.

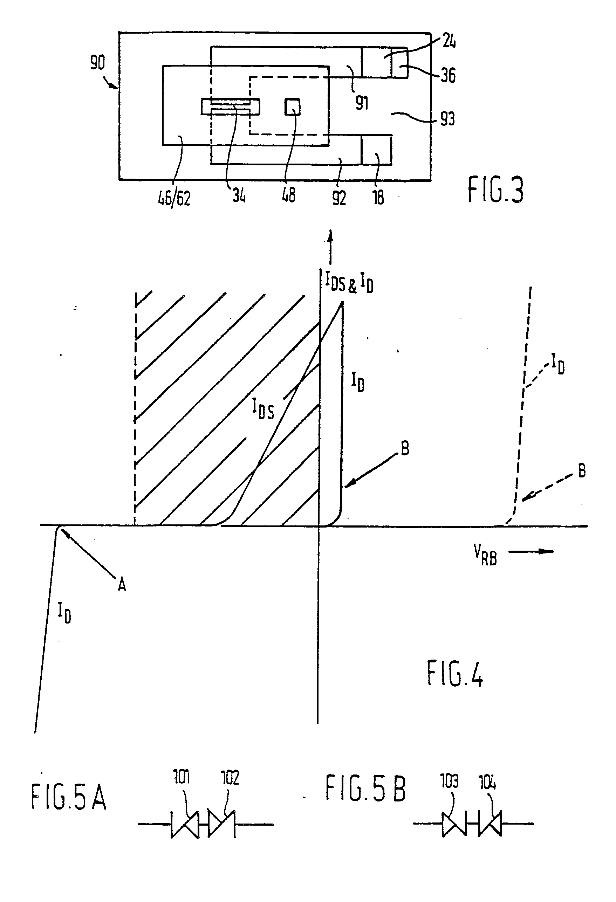

The second electrode 46 may take the form of a current conducting fork, strip or ring, and preferably a ring 62 (Fig. 3) of a current conducting material, such as aluminum or polysilicon, applied around the gate region 34 of the ISFET 16 and coupled by one or more protective elements in protection circuit 48, such as by a diode 64, two bucking or reverse polarity series connected diodes 65, 66, and/or a MOSFET 68 which become conductive outside the operative range of the ISFET 16, for example, a Zener diode or an avalanche diode or a MOSFET having a high threshold voltage to the measuring circuit.

As shown, the second electrode 46 is closely adjacent to the gate region 34 of the ISFET.

The choice for a protective element according to the teachings of the present invention is based on the condition that any leakage current which may be present within the operative range of the ISFET 16 gives rise to a shift in the reference electrode potential equal to the product of leakage current and impedance. This shift contributes to the voltage that is experiencenced by ISFET 16 and accordingly has a negative effect on the accuracy of the measurement, which becomes unacceptable if the leakage current comes to be in excess of an acceptable limit, for example, is more than 10 nA. Therefore, within the operative range of the ISFET 16, the DC currents which may pass through the protective elements should accordingly be kept below the acceptable limit.

The diodes 50, 51, 52, 64, 65 and 66 or MOSFET's 54, 68 which become conductive outside the operative range of the ISFET 16, to be used according to the teachings of the present invention, have a breakdown voltage lower than the voltage in which the damage causing effects occur. The second electrode 46, thus connected to the measuring circuit 10, provides protection of the ISFET sensor 16 from electrostatic voltages, which may occur during manufacture of the sensor 16 or also during use thereof.

When the apparatus 14 is being used at the same time that electrosurgery is being utilized, it is possible that a pulsating direct current will flow through the circuit formed by the reference electrode 32, the liquid 30, the electrode 46, the protective elements 64 and/or 68, the ISFET 16 and the amplifier 22 of the apparatus 14. This current will influence the reference electrode 32 potential and also lead to the occurrence of a Coulometric effect and accordingly, will effect the pH of the liquid 30 to be measured. This problem may be overcome by coupling the second electrode 46 into the circuit of the apparatus 14 with the two diodes 65, 66 connected in series with reverse polarity. The same approach is valid for protective circuit 44.

Also, when the protective element is diode 64, MOSFET 68 and/or the diodes 65, 66, these elements can be used in combination for both the first and the second electrode and may be arranged on the ISFET chip.

In the choice of a capacitor 56 is is important that the capacitance of the capacitor 56 is sufficiently high in order that the impedance may be low enough for the frequency of the spurious A.C. voltage applied, for example, that applied in electrosurgical operations. A capacitance of 100 nF or more is generally satisfactory for this purpose.

If desired, the capacitor 56 may be included in the amplifier 22.

When the mechanical switch 58 is used, it is effective to use a relay switch (not shown) for this purpose, which is activated by the source of interference and is maintained in the activated state for the time the interference lasts.

For example, in an apparatus 14 constructed according to the teachings of the present invention, the protection system or guard circuit 40 can be constructed so that the first electrode 42 is connected to the capacitor 56 and the second electrode 46 is connected to the diode 64, the MOSFET 68 and/or the diodes 65, 66.

As shown in Fig. 2, the apparatus 14 can be mounted in a catheter 80 where the reference electrode 32 is mounted in a terminal or tip part 82. The first electrode 42 is then realized by a metallic ring 42 spaced slightly rearwardly of the tip part 82. The ring electrode 42 has a surface area of about 1 cm$^2$ which provides a low-impedance contact with the liquid 30 (Fig. 1) in which the catheter 80 is to be immersed. The ring 42 can be electrically connected to a terminal on the ISFET chip (90-Fig. 3) through a polypropylene capacitor 56 having a capacitance of 100 nF, which in this case is included in the ISFET amplifier circuit. The ISFET sensor 16 is housed or mounted by an epoxy resin within a housing portion 84 of the catheter 80 located rearwardly of the ring electrode 42.

A plan view of a chip 90 containing the ISFET 16 which can be mounted in housing portion 84 of the catheter 80 is shown in Fig. 3. The chip 90 includes a source 91 and a drain 92 diffused in bulk 93 of the chip 90 and provided with a source bulk contact element 24, 36 and a drain contact element 18. A protective electrode, i.e. the second electrode 46 is realized by an aluminum ring 62 which is electrically connected to a protective circuit 48 which is diffused in the bulk 93 of the ISFET chip 90. The second electrode 46/aluminum ring 62 is applied around the gate region 34 on the chip 90.

In the graph shown in Fig. 4, the potential $V_{RB}$ of the reference electrode 32 relative to the bulk 36 of the ISFET 16 is plotted along the horizontal axis, and the current intensity along the vertical axis with $I_D$ being the diode current and $I_{DS}$ being the drain-source current. The hatched area in the graph represents the operative range of the ISFET sensor 16. The letter A designates the point of diode breakdown and the letter B represents the diode pass characteristic.

As stated above, the protective element can be a combination of two diodes (51, 52 or 65, 66) connected in anti-series or reverse polarity to each other. Such diodes may be two Zener diodes 101, 102 in a connection as represented in Fig. 5a or two Zener diodes 103, 104 in a connection as represented in Fig. 5b. With such protective elements, the graph of $I_D$ shown in Fig. 4 is modified to the graph of $I_D$ shown in phantom in Fig. 4.

The protection system or guard circuit 40 constructed according to the teachings of the present invention offers adequate protection from external effects or influences resulting from electromagnetic sources of interference which may be encountered in the biomedical and industrial fields, for example, in cases in which the ISFET sensor 16 and apparatus 14 is used in cooperation with electrosurgical apparatus or heart defibrillation apparatus. The protection further extends to the danger of the occurrence of electrostatic voltages as may occur during the manufacture of the ISFET sensor 16 or also during use of the apparatus 14 in practice. Moreover, the protection offered by the guard circuit 40 according to the present invention is effective in combination with all types of housings of the ISFET sensor 16, for example, the case of catheter tip sensors, flow cells and other types of housings.

It will be understood that modifications can be made to the apparatus 14 of the present invention, as described herein and shown in the accompanying drawings, without departing from scope of the present invention. Accordingly, the scope of the present invention is only to be limited as necessitated by the accompanying claims.

### Claims

1. An apparatus (14) for selectively measuring ions in a liquid, said apparatus comprising a measuring circuit (10) including a chemically sensitive ion sensor (16) in the form of an ion senstive field effect transistor (ISFET), a reference electrode (32), and an amplifier (22), characterized in that said measuring circuit (10) is connected to a protection system (12) comprising at least an electrode (42, 46) to be exposed to the liquid (30) to be investigated and connectable to the liquid via a low-impedance contact and a protection circuit (44, 48) coupled to the electrode (42, 46) which protection circuit is connected via a low-impedance contact to the ISFET (16) said protection circuit (44, 48) comprising one or more protective elements having a low impedance for high voltages and a high resistance to low voltages and adapted to become operative outside the operative range of said ISFET (16).

2. The apparatus according to claim 1, characterized in that said protection system (12) comprises a first electrode (42) and a second electrode (46), which second electrode (46) is closely adjacent to the gate region (34) of said ISFET (16), said two electrodes (42; 46) being each coupled via a corresponding protective element (50; 51, 52; 54; 56; 58; 64; 65, 66; 68) to the low-impedance contact for said ISFET.

3. The apparatus according to claim 2, characterized in that the first electrode (42) is made of a . conductive material and has a surface area sufficiently large to create a low-impedance contact with the liquid (30) to be investigated when immersed into said liquid.

4. The apparatus according to claim 2, characterized in that said first electrode (42) is coupled to said measuring circuit (10) by connecting a diode (50) and/or a MOSFET (54) which become conductive outside the operative range of the ISFET (16), a capacitor (56) and/or a mechanical switch (58) to the contact that is in low-impedance connection with the bulk of the ISFET (16),

5. The apparatus according to claim 2, characterized in that said second electrode (46) takes the form of a metallic ring (62) applied around the gate region (34) of the ISFET and is coupled to said measuring circuit (10) by a diode (54) and/or a MOSFET (68) which become conductive outside the operative range of the ISFET.

6. The apparatus according to claim 5, characterized in that said second electrode (46) is coupled to said measuring circuit (10) by two diodes (65, 66) series-connected in reverse polarity to each other.

7. The apparatus according to claims 5 or 6, characterized in that the diode (50; 54) or diodes (51, 52; 65, 66) or the MOSFET (54), (68) are provided on the ISFET chip (90).

8. The apparatus according to claim 4, characterized in that said capacitor (56) has a capacitance of about 100 nF or higher.

9. The apparatus according to claim 4, characterized in that said capacitor (56) is included in the amplifier (22).

10. The apparatus according to claim 4, characterized in that said mechanical switch (58) is a relay switch which is activated by the source of interference for the time of the duration of the interference.

11. The apparatus according to claim 4, characterized in that said first electrode (42) is connected to said capacitor (56) and said second electrode (46) is connected to said diode (54) and/or said MOSFET (68).

### Patentansprüche

1. Vorrichtung (14) zur selektiven Messung von Ionen in einer Flüssigkeit, wobei die Vorrichtung eine Meßschaltung (10) umfaßt, welche einen chemisch sensitiven Ionensensor (16) in Form eines ionen-sensitiven Feldeffekttransistors (ISFET) umfaßt, sowie eine Referenzelektrode (32), und einen Verstärker (22), dadurch gekennzeichnet, daß die Meßschaltung (10) mit einem Schutzsystem (12) verbunden ist, welches zumindest eine Elektrode (42, 46) umfaßt, welche der zu untersuchenden Flüssigkeit (30) auszusetzen ist und welche mit der Flüssigkeit über einen niedrigimpedanten Kontakt und eine Schutzschaltung (44, 48) verbindbar ist, welche mit der Elektrode (42, 46) verbunden ist, wobei die Schutzschaltung über einen niedrigimpedanten Kontakt mit dem ISFET (16) verbunden ist, wobei die Schutzschaltung (44, 48) ein oder mehrere Schutzelemente umfaß, welche eine niedrige Impedanz für hohe Spannungen und einen hohen Widerstand für niedrige Spannungen umfaßt und so ausgebildet ist, daß sie außerhalb des Betriebscbereiches des ISFET (16) betätigbar ist.

2. Vorrichtung nach Anspruch 1, dadurch gekennzeichnet, daß das Schutzsystem (12) eine erste Elektrode (42) und eine zweite Elektrode (46) umfaßt, wobei die zweite Elektrode (46) nahe benachbart zu der Gate-Zone (34) des ISFET (16) angeordnet ist, wobei die beiden Elektroden (42; 46) jeweils über zugeordnete Schutzelemente (50; 51, 52; 54; 56; 58; 64; 65, 66; 68) mit dem niedrigimpedanten Kontakt für den ISFET gekoppelt sind.

3. Vorrichtung nach Anspruch 2, dadurch gekennzeichnet, daß die erste Elektrode (42) aus einem leitenden Material gefertigt ist und einen Oberflächenbereich aufweist, welcher ausreichend groß ist, um einen niedrigimpedanten Kontakt mit der zu untersuchenden Flüssigkeit (30) zu schaffen, wenn diese in die Flüssigkeit eingetaucht ist.

4. Vorrichtung nach Anspruch 2, dadurch gekennzeichnet, daß die erste Elektrode (42) mit der Meßschaltung (10) dadurch gekoppelt ist, daß eine Diode (50) und/oder eine MOSFET (54), welcher außerhalb des Betriebsbereiches des ISFET (16) leitend wird, ein Kondensator (56) und/oder ein mechanischer Schalter (58) mit dem Kontakt verbunden werden, welcher sich in der niedrigimpendanten Verbindung mit dem Substratanschluß des ISFET (16) befindet.

5. Vorrichtung nach Anspruch 2, dadurch gekennzeichnet, daß die zweite Elektrode (46) in Form eines metallischen Rings (62) ausgebildet ist, welcher um die Gate-Zone (34) des ISFET angeordnet ist und mit der Meßschaltung (10) durch eine Diode (54) und/oder ein MOSFET (68), welcher außerhalb des Betriebsbereiches des ISFET leitend wird, verbunden ist.

6. Vorrichtung nach Anspruch 5, dadurch gekennzeichnet, daß die Elektrode (46) mit der Meßschaltung (10) durch zwei Dioden (65, 66) gekoppelt ist, welche miteinander in umgekehrter Polarität serienverbunden sind.

7. Vorrichtung nach Anspruch 5 oder 6, dadurch gekennzeichnet, daß die Diode (50; 54) oder die Dioden (51, 52; 65, 66) oder der MOSFET (54, 68) auf dem ISFET-chip (90) vorgesehen sind.

8. Vorrichtung nach Anspruch 4, dadurch gekennzeichnet, daß der Kondensator (56) eine Kapazität von ungefär 100 nF oder darüber aufweist.

9. Vorrichtung nach Anspruch 4, dadurch gekennzeichnet, daß der Kondensator (56) in dem Verstärker (22) aufgenommen ist.

10. Vorrichtung nach Anspruch 4, dadurch gekennzeichnet, daß der mechanische Schalter (58) ein Relaisschalter ist, welcher durch die Interferenzquelle für die Zeit der Andauer der Interferenz aktiviert ist.

11. Vorrichtung nach Anspruch 4, dadurch gekennzeichnet, daß die erste Elektrode (42) mit dem Kondensator (56) verbunden ist und daß die zweite Elektrode (46) mit der Diode (54) und/oder dem MOSFET (68) verbunden ist.

## Revendications

1. Appareil (14) pour la mesure sélective des ions dans un liquide, cet appareil comportant un circuit de mesure (10), comprenant un détecteur chimiquement sensible aux ions (16) sous forme d'un transistor à effet de champ sensible aux ions (ISFET), une électrode de référence (32) et un amplificateur (22), caractérisé en ce que ce circuit de mesure (10) est connecté à un système de protection (12) comprenant au moins une électrode (42, 46) à mettre en contact avec le liquide (30) par l'intermédiaire d'un contact à faible impédance et un circuit de protection (44, 48) couplé à l'électrode (42, 46), qui est connecté par l'intermédiaire d'un contact à faible impédance à l'ISFET 16, ce circuit de protection (44, 48) comprenant un ou plusieurs éléments de protection présentant une faible impédance vis à vis des hautes tensions et une résistance élevée vis à vis des basses tensions et étant adaptés pour devenir opérationnel en dehors du champ d'action de l'ISFET 16.

2. Appareil selon la revendication 1, caractérisé en ce que ce système de protection (12) comporte une première électrode (42) et une seconde électrode (46), cette dernière se trouvant trés proche de la région de porte (34) de l'ISFET 16, les deux électrodes (42, 46) étant chacune reliée par un élément de protection correspondant (50; 51, 52; 54; 56; 58; 64; 65, 66; 68) à un contact à faible impédance pour l'ISFET 16.

3. Appareil selon la revendication 2, caractérisé en ce que la première électrode (42) est réalisée en un matériau conducteur et possède une surface spécifique suffisamment grande pour créer un contact à faible impédance avec le liquide (30) à examiner, quand il est plongé dans ce liquide.

4. Appareil selon la revendication 2, caractérisé en ce que cette première électrode (42) est couplée au circuit de mesure (10) par branchement d'une diode (50) et/ou un MOSFET (54) qui devient conducteur en dehors du champ d'action de l'ISFET 16, un condensateur (56) et/ou un commutateur méchanique (58) au contact qui est dans un branchement à faible impédance avec la masse de l'ISFET 16.

5. Appareil selon la revendication 2, caractérisé en ce que cette seconde électrode (46) prend la forme d'une bague métallique (62) appliquée autour de la région de porte (34) de l'ISFET 16 et est couplée au circuit de mesure (10) par une diode (54) et/ou un MOSFET (68) qui deviennent conducteurs en dehors du champ d'action de l'ISFET.

6. Appareil selon la revendication 5, caractéisé en ce que cette seconde électrode (46) est couplée au circuit de mesure (10) par deux diodes montées en séries avec leurs polarités inversées l'une par rapport à l'autre.

7. Appareil selon les revendications 5 ou 6, caractérisé en ce que la diode (50; 54) ou les diodes (51, 52; 65, 66) ou le MOSFET (54), (68) sont placés sur la puce ISFET (90).

8. Appareil selon la revendication 4, caractérisé en ce que le condensateur (56) présente une capacité d'au moins environ 100 nF.

9. Appareil selon la revendication 4, caractérisé en ce que le condensateur (56) est incorporé à l'amplificateur (22).

10. Appareil selon la revendication 4, caractérisé en ce que le commutateur mécanique (58) est un commutateur relais qui est activé par la source d'interférences pendant le laps de temps où se produisent ces interférences.

11. Appareil selon la revendication 4, caractérisé en ce que la première électrode (42) est reliée à ce condensateur (56) et la seconde électrode (46) est reliée à la diode (54) et/ou au MOSFET (68).

FIG.1

FIG.2

FIG.3

FIG.4

FIG.5 A

FIG.5 B